# EUROPÄISCHE PATENTSCHRIFT

(11) **EP 2 385 286 B1**
(45) Veröffentlichungstag und Bekanntmachung des Hinweises auf die Patenterteilung: **10.07.2013**
(21) Anmeldenummer: 10004748.9
(22) Anmeldetag: 05.05.2010
(51) Int. Cl.: F16L 5/02, F16L 5/08, F16L 5/10, F16L 5/14, H02G 3/22

(54) **Leitungsdurchführung mit Schichtenfolge**
Circuit lead through with a sequence of layers
Passage de ligne avec empilement

(43) Veröffentlichungstag der Anmeldung: 09.11.2011
(73) Patentinhaber: Hauff-Technik GmbH & Co. KG, 89542 Herbrechtingen (DE)
(72) Erfinder: Kurz, Ralf, 89537 Giengen (DE)
(74) Vertreter: Szynka, Dirk

(56) Entgegenhaltungen:
- EP-A1- 1 843 071
- EP-A1- 2 131 085

## Beschreibung

Die vorliegende Erfindung betrifft eine Leitungsdurchführung zum abgedichteten Durchführen einer Leitung durch eine Wand mit einem Elastomerkörper und einer Spannvorrichtung zum Spannen des Elastomerkörpers.

Aus dem Stand der Technik sind beispielsweise Leitungsdurchführungen bekannt, bei denen ein Elastomerkörper zwischen zwei Spannplatten entlang der Leitungsrichtung komprimiert wird und sich dadurch in Richtungen quer zur Leitungsrichtung sowohl an die Leitung als auch an die Wand, etwa an eine Mantelinnenfläche der Wandöffnung oder einen in diese eingesetzten Rahmen, dichtend anlegt. Dies ist jedoch nur eine von mehreren Möglichkeiten zur Montage des Elastomerkörpers, die das Anwendungsgebiet illustrieren, die folgende Erfindung jedoch nicht einschränken soll.

Da in der Praxis nicht nur unterschiedliche Leitungstypen, sondern vor allem auch verschiedene Leitungsquerschnitte abzudichten sind, muss oftmals eine Mehrzahl Leitungsdurchführungen vorgehalten werden, deren Durchgangsöffnungen unterschiedlichen Leitungsquerschnitten entsprechen. Die Durchgangsöffnung muss also innerhalb gewisser Grenzen auf den Leitungsquerschnitt angepasst sein, weil sich trotz der Verformung des Elastomerkörpers beim Verpressen keine beliebig großen Distanzen überbrücken lassen.

Um auch mit nur einer Leitungsdurchführung eine Anpassung an mehrere Leitungsquerschnitte zu ermöglichen, sind aus dem Stand der Technik, etwa aus der EP 1 843 071 A1, Elastomerkörper bekannt, bei denen in der Durchgangsöffnung eine Folge mehrerer Schichten vorgesehen ist. Diese auch als "Zwiebelringe" oder "Zwiebelschalen" bezeichneten Schichten hängen dabei an einer in Leitungsrichtung außenliegenden Fläche über relativ dünne Brücken aneinander. Eine Schicht kann dann durch ein Auftrennen der sie mit dem übrigen Elastomerkörper verbindenden Brücke von diesem gelöst und anschließend aus der Durchgangsöffnung genommen werden. Auf diese Weise ist eine Anpassung des Querschnitts der Durchgangsöffnung an den Leitungsquerschnitt möglich.

Zur Herstellung eines solchen Elastomerkörpers mit einer Schichtenfolge werden in einem Elastomervollkörper mit einem diesen in Leitungsrichtung nicht vollständig durchsetzenden Schneidewerkzeug in sich geschlossene Schnittlinien gezogen, wobei an einer Seite des Vollkörpers Brücken zwischen den Schichten verbleiben. Um einen Elastomerkörper mit einer Vielzahl Schichten zu erhalten, sind also mehrere zeit- und kostenintensive Schneidevorgänge notwendig.

Die DE 20 2004 011 202 U1 zeigt eine aus einer Mehrzahl Dichtelementen aufgebaute Moduldichtung, wobei zur Anpassung einer Durchgangsöffnung an unterschiedliche Leitungsquerschnitte Dichtelemente aus der Durchgangsöffnung genommen werden können. Bei einer Ausführungsform stützen sich zwei radial innere Dichtungselemente mit jeweils einem sich nach außen erstreckenden, umlaufenden Kragen an einem äußeren Dichtungselement ab.

Der Erfindung liegt die Aufgabe zugrunde, eine möglichst vorteilhafte Ausgestaltung einer Leitungsdurchführung mit einem Elastomerkörper anzugeben.

Erfindungsgemäß wird diese Aufgabe mit einer Leitungsdurchführung zum Aufbauen eines dichtenden Verschlusses einer von einer Leitung durchsetzten Öffnung in einer Wand mit einem Elastomerkörper zur dichten Anlage an der Leitung aus mehreren für sich einstückigen Teilen und einer Spannvorrichtung zum Spannen des Elastomerkörpers auf die Leitung gelöst, wobei die Elastomerkörperteile dazu ausgelegt sind, im zusammengebauten Zustand eine Folge mehrerer hinsichtlich einer den Abstand zur Leitung bestimmenden Richtung benachbarter Schalen zu ergeben und die Leitung In jeder Schicht dieser Folge von den Schalen vollständig umgeben ist. Dabei ist an jedem Elastomerkörperteil hinsichtlich der Abstandsrichtung jeweils nicht mehr als eine Schale der Folge vorgesehen und liegt jeweils eine Mehrzahl der Elastomerkörperteile mit einem in Leitungsrichtung endseitig an der Schale ausgebildeten und sich in Abstandsrichtung von dieser nach innen und/oder außen, also zur Leitung hin und/oder von dieser weg, erstreckenden Abschnitt des Elastomerkörperteils an einem anderen Elastomerkörperteil an; die Schalen sind Rotationskörper oder Segmente davon mit einer gemeinsamen in Leitungsrichtung ausgerichteten Rotationsachse. Erfindungsgemäß ist eine Schale eines Elastomerkörperteils durch eine sich in Leitungs- und Abstandsrichtung erstreckende Trennfuge unterbrochen.

Die Schalen können einerseits innenseitig am Elastomerkörper, also in einer Durchgangsöffnung für die Leitung zu dieser hin orientiert, vorgesehen sein und somit einer Anpassung an unterschiedliche Leitungsquerschnitte dienen; in diesem Fall erstreckt sich der Elastomerkörperteilabschnitt nach außen. Im Falle einer außenseitig am Elastomerkörper, also an einer der Leitung entgegengesetzten Seite des Elastomerkörpers, vorgesehenen Schale, die eine Anpassung an verschiedene Querschnitte von Wandöffnungen ermöglicht, erstreckt sich der Elastomerkörperteilabschnitt hingegen nach innen zur Leitung hin.

Eine Schale ist in diesem Kontext ein Körper, dessen Ausdehnung in Abstandsrichtung kleiner ist als die Ausdehnung in Leitungs- und Umlaufrichtung. Da die Erfindung sich nicht auf Leitungen und Wandöffnungen mit einem kreisförmigen Querschnitt beschränkt, folgt eine Schale nicht notwendigerweise einer gekrümmten Fläche, sondern kann beispielsweise im Falle eines rechteckförmigen Querschnitts auch plan ausgebildet sein. Ferner ist eine Schale nicht notwendigerweise ein in sich geschlossener, die Leitung gegebenenfalls abgesehen von einer sich in Abstands- und Leitungsrichtung erstreckenden Trennfuge vollständig umschließender Körper, sondern kann zum Umschließen der Leitung in Umlaufrichtung auch an eine oder zwei weitere Schalen grenzen und dabei bezogen auf die Abstandsrichtung innerhalb oder außerhalb des übrigen Elastomerkörpers angeordnet sein. In einer Schicht umschließen dann eine Schale allein oder mehrere gemeinsam die Leitung vollständig.

Sofern in der vorliegenden Offenbarung Angaben bezüglich einer Relativanordnung von Elastomerkörperteilen getroffen werden, sind diese Angaben auf den zusammengebauten Zustand des Elastomerkörpers zu lesen. Dabei meinen insbesondere Angaben zur Richtung einer Leitung oder zu einem Abstand von dieser nicht, dass die Leitung auch tatsächlich durch den Elastomerkörper geführt sein muss, sondern beschreiben die Geometrie, als ob eine Leitung hindurchgeführt wäre.

Im Gegensatz zum Stand der Technik ist an jedem Elastomerkörperteil hinsichtlich der Abstandsrichtung jeweils nicht mehr als eine Schale je Schichtenfolge vorgesehen, sodass jeder Elastomerkörperteil für sich eine einfache Geometrie hat. Ein besonderer Vorteil der Erfindung besteht nun darin, dass ein Elastomerkörper beispielsweise in Abhängigkeit von einem gewünschten Minimaldurchmesser der Durchgangsöffnung für die Leitung aus einer entsprechenden Zahl Elastornerkörper teile aufgebaut werden kann, wobei dann typgleiche Elastomerkörperteile auch für einen Elastomerkörper mit größerer Durchgangsöffnung verwendet werden können; es müssen lediglich die Elastomerkörperteile der inneren Schalen weggelassen werden. Indem also je Schichtenfolge in Abstandsrichtung jeweils nicht mehr als eine Schale an jedem Elastomerkörperteil vorgesehen ist, sind die eine Folge bildenden Elastomerkörperteile dahingehend entkoppelt, dass sie auch in anderer Kombination zusammengesetzt werden können. Ein Elastomerkörperteil kann seiner Form nach also vorzugsweise in eine Vielzahl unterschiedlicher Leitungsdurchführungen integriert werden, wodurch einmalig für ein Entwerfen der Geometrie und Bereitstellen von Herstellungswerkzeugen anfallende Kosten auf mehrere Leitungsdurchführungen und somit Produkte verteilt werden können. Analog gilt das für außenliegende Schalen und die Anpassung an Wandöffnungsmaße.

Die Angabe, dass an einem Elastomerkörperteil in Abstandsrichtung nicht mehr als eine Schale vorgesehen ist, bezieht sich dabei jeweils auf eine Schichtenfolge, sodass an einem Elastomerkörperteil in Abstandrichtung auch zwei Schalen vorliegen können, sofern die eine beispielsweise in einer am Elastomerkörper außenliegenden Schichtenfolge angeordnet ist und die andere in einer Schichtenfolge in der Durchgangsöffnung des Elastomerkörpers. Der Elastomerkörper kann in einer die Leitung umfassenden Ebene also beispielsweise ein U-förmiges Profil haben, wobei dann ein Schenkel in der außenliegenden und der gegenüberliegende Schenkel in der innenliegenden Schichtenfolge angeordnet ist. Die Elastomerkörperteilabschnitte der eine Schichtenfolge bildenden Elastomerkörperteile erstrecken sich also in Bezug auf einen gemeinsamen Punkt, beispielsweise einen Schwerpunkt des Leitungsquerschnitts, entweder alle relativ zu ihren Schalen zu diesem Punkt hin oder von diesem weg. Hierbei ist beispielsweise ein zwei in Abstandsrichtung beabstandete Schalen verbindender Elastomerkörperteilabschnitt der geometrischen Mitte zwischen den Schalen entsprechend als hälftig zu der jeweils näheren Schale gehörend zu betrachten. Die Schichten einer Folge zeichnen sich des Weiteren dadurch aus, dass sie entweder für eine Anpassung der selben Durchgangsöffnung oder des Außenumfangs vorgesehen sind.

Ein Monteur kann eine zusammengesetzte Leitungsdurchführung dann durch Abtrennen einer Schale von dem Elastomerkörperteilabschnitt auf einfache Weise anpassen - im Falle einer innenliegenden Schale an eine Leitung größeren Querschnitts, im Falle einer außenliegenden Schale an eine kleinere Durchgangsöffnung. Das Abtrennen kann etwa durch Schneiden mit einem Schneidewerkzeug oder auch durch Abreißen erfolgen, beispielsweise entlang einer vorgegebenen Trennfuge. Für eine Änderung der Anzahl an Schalen müssen diese jedoch nicht notwendigerweise abgetrennt werden, sondern es kann beispielsweise auch ein Elastomerkörperteil als Ganzes, also samt dem Elastomerkörperteilabschnitt, aus dem Elastomerkörper genommen werden. In diesem Fall wird beim Vergrößern der Durchgangsöffnung oder Verkleinern des Außenumfangs die Ausdehnung des Elastomerkörpers in Leitungsrichtung verringert, was beispielsweise durch eine Anpassung der Spannvorrichtung ausgeglichen werden kann. Sofern dann zu einem späteren Zeitpunkt eine Leitung mit kleinerer Querschnittfläche gedichtet oder die Durchführung in eine größere Wandöffnung gesetzt werden soll, kann die entsprechende Zahl Elastomerkörperteile wiederum eingesetzt werden.

Wenngleich an jedem Elastomerkörperteil je Schichtenfolge in Abstandsrichtung nicht mehr als eine Schale vorgesehen ist, können in Umlaufrichtung dennoch mehrere, beispielsweise durch sich in Leitungs- und Abstandsrichtung erstreckende Schnitte voneinander getrennte, Schalen vorliegen.

Bevorzugte Ausgestaltungen der Erfindung sind in den abhängigen Ansprüchen angegeben, wobei sich einige dieser Ausgestaltungen auch auf Sätze bzw. Systeme mit einer Mehrzahl solcher Leitungsdurchführungen beziehen. In der gesamten Of fenbarung wird nicht im Einzelnen zwischen der Beschreibung einer Leitungsdurchführung, eines Satzes bzw. Systems von Leitungsdurchführungen, Verfahren zu deren Herstellung und dem Verwendungsaspekt der Erfindung unterschieden; die Of fenbarung ist implizit im Hinblick auf sämtliche Kategorien zu verstehen.

Eine erste Ausgestaltung der Erfindung sieht vor, dass ein Elastomerkörperteil mit seiner Schale an einer Schale eines in der Abstandsrichtung außenliegend nächst benachbarten Elastomerkörperteils anliegt und an diesem auch mit seinem Elastomerkörperteilabschnitt eine Anlagefläche findet, die größer ist als eine Querschnittfläche seiner Schale in einer zur Leitungsrichtung senkrechten Ebene, vorzugsweise mindestens doppelt so groß, besonders bevorzugt mindestens viermal so groß. Die Anlage der Schalen erfolgt hierbei flächig zwischen einer Außenmantelfläche der inneren und einer Innenmantelfläche der äußeren Schale, wobei "flächig" in dieser Reihenfolge zunehmend bevorzugt mindestens 10 %, 20 %, 30 %, 40 % der genannten Innenmantelfläche meint. Die Querschnittfläche der Schale wird bezogen auf die Leitungsrichtung in einem Bereich des Elastomerkörperteils betrachtet, in dem allein die Schale und nicht auch der daran anschließende Elastomerkörperteilabschnitt vor liegt.

Bei dieser Ausführungsform, die sich sowohl auf innen- als auch auf außenliegende Schalen bezieht, können vorzugsweise sämtliche Elastomerkörperteilabschnitte zu einer Stirnseite des Elastomerkörpers hin angeordnet werden, sodass ein Auslösen der Schalen dann auch vorteilhafterweise allein von dieser Stirnseite aus erfolgen kann. Darüber hinaus ist auch das Zusammensetzen eines solchen Elastomerkörpers auf einfache Weise möglich, weil alle Elastomerkörperteile aus der selben Richtung eingesetzt werden können.

In anderer Ausgestaltung liegt ein Elastomerkörperteil mit seiner Schale an einer Schale eines in der Abstandsrichtung außenliegend nächst benachbarten Elastomerkörperteils an und findet ferner mit seinem Elastomerkörperteilabschnitt an einem in der Abstandsrichtung außenliegend übernächst benachbarten Elastomerkörperteil eine Anlagefläche, die größer ist als eine Querschnittfläche einer Schale des übernächst benachbarten Elastomerkörperteils in einer zur Leitungsrichtung senkrechten Ebene. Hierbei meint "gröβer" wie auch im zuvor genannten Fall, dass die Anlagefläche vorzugsweise mindestens doppelt, besonders bevorzugt mindestens viermal, so groß wie die jeweils genannte Querschnittfläche ist.

Bei dieser Ausführungsform können im Falle einer innenseitigen Schichtenfolge die außenliegenden Schalen an beiden Stirnseiten vorzugsweise von Elastomerkörperteilabschnitten bedeckt sein, sodass lediglich ein freies Ende der innersten Schale an eine Stirnseite grenzt und sichtbar ist; bei außenseitiger Schichtenfolge entsprechend ein freies Ende der äußersten Schale. Sofern die Schalen für eine Anpassung des Elastomerkörpers nicht dauerhaft von den Elastomerkörperteilabschnitten abgetrennt, sondern lediglich durch eine Drehbewegung der Schale zu dem Elastomer körperteilabschnitt hin "ausgeklappt" werden sollen, bietet diese Ausführungsform den Vorteil, dass die Schalen einer Folge abwechselnd zu beiden Seiten ausgeklappt werden, wodurch für die ausgeklappten Schalen ein insgesamt größerer Raum zur Verfügung steht, diese sich gegenseitig also weniger behindern.

Im Übrigen muss die Anordnung der Elastomerkörperteile nicht notwendigerweise allein in der hier oder der zuvor beschriebenen Weise erfolgen, sondern es sind auch Kombinationen möglich. So können beispielsweise sämtliche Elastomerkörperteilabschnitte der die äußeren Schalen bildenden Elastomerkörperteile auf einer Seite des Elastomerkörpers angeordnet sein und lediglich der Elastomerkörperteilabschnitt des die innerste Schale bildenden Elastomerkörperteils auf der entgegengesetzten Seite des Elastomerkörpers angeordnet werden, wodurch die freien Enden der äußeren Schalen abgedeckt und beispielsweise für Transport und Lagerung geschützt in Position gehalten werden.

Bei einer weiteren Ausführungsform ist an einer der Schale entgegengesetzten, sich für den Fall innenliegender Schalen von der Leitung weg oder im Falle außenliegender Schalen zu dieser hin erstreckenden Stirnseite eines Elastomerkörperteilabschnitts eine Markierung, vorzugsweise eine Einkerbung, vorgesehen. Eine solche Markierung kann beispielsweise die Position einer Außenmantelfläche der Schale an der der Schale entgegengesetzten Seite des Elastomerkörperteilabschnitts anzeigen und somit eine bevorzugte Trennlinie vorgeben. Wenn beispielsweise zur Anpassung an eine Leitung größeren Durchmessers eine Mehrzahl Schalen ausgelöst werden muss, kann der verbleibende Elastomerkörperteilabschnitt des ehemals die innerste Schale bildenden Elastomerkörperteils in die Durchgangsöffnung hineinragen und das Durchführen der Leitung bzw. das Auslösen weiter außenliegender Schalen erschweren. Es können deshalb auch mehrere Markierungen an dem Elastomerkörperteilabschnitt vorgesehen werden, welche die Position von in Abstandsrichtung au-βerhalb liegenden Schalen kennzeichnen und ein Abtrennen des entsprechenden Elastomerkörperteilabschnitts erleichtern. Bei bevorzugten Ausführungsformen können die Markierungen auch mit Dimensionsangaben zu den jeweiligen Durchgangsöffnungen versehen sein, sodass ein Monteur in Abhängigkeit von der abzudichtenden Leitung auf besonders einfache Weise die auszulösenden Schalen bzw. Bereiche der Elastomerkörperteilabschnitte auswählen kann. Bei einer Mehrzahl außenliegender Schalen können analog hierzu die weiter innenliegenden gekennzeichnet werden.

Eine weitere Ausführungsform betrifft eine Leitungsdurchführung, bei der zwischen zwei Elastomerkörpertellen eine formschlüssige Verbindung besteht. Diese vorzugsweise zwischen den Elastomerkörperteilabschnitten der Elastomerkörperteile vorliegende Verbindung kann etwa zwischen einem Vorsprung am ersten Elastomerkör perteil und einer zu dem Vorsprung komplementären Vertiefung in dem zweiten Elastomerkörperteil ausgebildet sein. Der Vorsprung und die Vertiefung sind also an gegenüberliegenden Seitenflächen der beiden zu verbindenden Elastomerkörperteile angeordnet und greifen jedenfalls bezüglich der Leitungsrichtung formschlüssig, gegebenenfalls auch mit einem gewissen Hinterschnitt, ineinander, die Verbindung kann unter Kraftaufwendung aufgetrennt werden. Bei dieser Ausführungsform werden die Elastomerkörperteile vorzugsweise auch ohne einen sie durchsetzenden Bolzen zusammengehalten, was etwa bei einem Leitungsdurchführungssystem mit mehreren Elastomerkörpern und einer quer zur Leitungsrichtung wirkenden Spannvorrichtung, welche die Elastomerkörper nicht durchdringt, vorteilhaft sein kann.

Erfindungsgemäß sind die Schalen Rotationskörper oder Segmente von solchen mit einer gemeinsamen in Leitungsrichtung ausgerichteten Rotationsachse. Die Durchgangsöffnung ist also bei dieser Ausführungsform in einer Ebene senkrecht zur Leitungsrichtung kreisförmig. Sofern hierbei eine Schale allein die Leitung umschließt. ist sie von einer sich in Leitungs- und Abstandsrichtung erstreckenden Trennfuge unterbrochen, etwa zur Realisierung eines aufklappbaren Elastomerkörpers. Der Rotationskörper muss jedoch nicht notwendigerweise aus einer einzigen Schale aufgebaut sein, sondem kann auch mehrere, etwa zwei, drei oder vier, in Umlaufrichtung aneinander anschließende Schalen umfassen, von denen jede dann ein Segment des Rotationskörpers darstellt.

In weiterer Ausgestaltung liegt der sich in Abstandsrichtung erstreckende Elastomerkörperteilabschnitt in Leitungsrichtung über höchstens 50 %, vorzugsweise 35 %, weiter bevorzugt 20 %, besonders bevorzugt 10 %, der Elastomerkörperteillänge vor. Die Verbindungsstege zwischen der Schale und dem daran anschließenden Elastomerkörperteilabschnitt bleiben bei bevorzugten Ausführungsformen also relativ schmal, sodass die Schichten leicht entfernt, etwa abgeschnitten oder gegebenenfalls auch abgerissen werden können. Eine solche schmale Ausführung des Verbindungsstegs ist ferner auch im Falle eines Ausklappens der Schicht vorteilhaft, weil das Gelenk weniger dick und damit leichter biegbar ist.

Bei einer weiteren Ausführungsform enthält ein Elastomerkörperteil einen Funktionszusatz, nämlich Festkörperpartikel zur EMV-Abschirmung, zur Röntgenabsorption oder zur Verbesserung der Brandschutzeigenschaften.

In weiterer Ausgestaltung sind die Elastomerkörper Spritzgussteile, Pressteile oder Transferpressteile. Zur Herstellung solcher Spritzgussteile kann einer Kavität fließfähiges Kunststoffmaterial zugeführt werden und in der Kavität dann zumindest teilweise zu dem Formteil aushärten. Beim Pressen und Transferpressen wird plastischformbares Material mit einer Form gepresst, im Fall des Transferpressens dabei mit einem Extruder zugeführt. Feer kommen auch ein (druckloses) Gießen, ein Schäumen in eine Form, ein Extrudieren in eine Form oder ein Blasen in eine Form in Betracht. Durch die einfache Ausgestaltung der Elastomerkörperteile, die aus einem Elastomerkörperteilabschnitt und nur einer in Abstandsrichtung an diesen anschließenden Schale aufgebaut sind, ist die Herstellung varteilhafterweise mit solchen formenden Verfahren möglich und gegenüber dem konventionellen Einschneiden von Schlitzen und Abtragen von Material vereinfacht. Da wie eingangs beschrieben ein Elastomerkörperteil auch in Elastomerkörper verschiedener Leitungsdurchführungen integriert werden kann, lassen sich auch die Formwerkzeuge flexibler ver wenden und können gut ausgelastet werden.

Im Sinne einer Vereinfachung der Herstellung bezieht sich die Erfindung auch auf einen Satz an Leitungsdurchführungen, bei dem Elastomerkörper für verschiedene Leitungsdurchführungen standardisiert sind.

Dabei sollen unterschiedliche Leitungsdurchführungen jeweils identische Elastomerkörper enthalten. Die Leitungsdurchführungen können hinsichtlich der Zahl der aufnehmbaren Leitungen und/oder ihrer Abmessungen verschieden sein. Die enthaltenen Elastomerkörper müssen nicht zwingend vollständig identisch sein, beispielsweise können in einer Leitungsdurchführung für Leitungen größeren Durchmessers von Beginn an entsprechend weniger Elastomerkörperteile vorgesehen sein. Es sollen aber in verschiedenen Leitungsdurchführungen hinsichtlich der Elastomerkörperteile weitere Identitäten bestehen, etwa indem für eine vergleichbare Größenklasse von Leitungen derselbe Elastomerkörper verwendet wird. Mit "Elastomerkörper" ist hierbei jedenfalls der Satz aus Elastomerkörperteilen gemeint, der hinsichtlich der Schichtenfolge ein in sich abgeschlossenes System bildet. Diese Elastomerkörper können natürlich weiter außen (bei Zylindergeometrien radial weiter außen) von anderen Bauteilen aus Elastomerwerkstoffen umgeben sein, etwa zusammengehalten sein, die ebenfalls an der Verpressung Teil haben. Auf diese bezieht sich der Gedanke der ldentität oder Teilidentität zwischen Elastomerkörpern nicht.

Ein Aspekt der Erfindung betrifft größere Öffnungen, die eine ganze Zahl von Leitungen mit einzelnen Durchführungen aufnehmen. Die einzelnen Leitungsdurchführungen weisen dabei eine solche Querschnittsfläche senkrecht zur Leitungsrichtung im Verhältnis zu der Querschnittsfläche der Wandöffnung auf, dass sie gemeinsam mit mindestens einer Spannvorrichtung zum Dichten eingesetzt werden können, wobei mindestens zwei Leitungsdurchführungen von der mindestens einen, quer zur Leitungsrichtung auf die Elastomerkörper wirkenden Spannvorrichtung gemeinsam gespannt werden. Dabei liegt eine jeweilige Dichtfläche eines jeweiligen Elastomerteils im gespanntem Zustand der Spannvorrichtung auf dem Umfang der Leitungsdurchführung senkrecht zur Leitungsrichtung außen.

Bei dieser Ausführungsform werden also beispielsweise in einem Rahmen innerhalb der Wandöffnung je zwei Halbschalen aus einem Elastomer um eine jeweilige Leitung gelegt, die gemeinsam die Leitung vollständig umschließen (und ihrerseits aus einer Mehrzahl Elastomerkörperteile aufgebaut sind). Die Wandöffnung wird von einer Seite beginnend mit weiteren Elastomerkörpern, die gegebenenfalls paarweise weitere Leitungen umschließen, teilweise aufgefüllt. In den verbleibenden Teil wird eine Spannvorrichtung, eventuell gemeinsam mit weiteren Füllstücken zum vollständigen Ausfüllen der Wandöffnung, eingesetzt, um die Elastomerkörper und Leitungen in der Wandöffnung mechanisch zu befestigen und abzudichten, indem die bis dahin lose aufeinander gelegten Elastomerkörper senkrecht zur Leitungsrichtung verpresst werden. Der erwähnte Rahmen ist dabei für die Erfindung nicht zwingend.

Bei einer anderen Ausgestaltung sind die als Mehrzahl vorhandenen Leitungsdurchführungen Module, die jeweils nicht nur eine solche Querschnittsfläche, dass sie gemeinsam zum Dichten in die Durchlassöffnung eingesetzt werden können, und einen erfindungsgemäßen Elastomerkörper zum Aufnehmen der Leitung aufweisen, sondern auch jeweils eine Spannvorrichtung zum individuellen Spannen in Leitungsrichtung und eine Elastomerdichtfläche, die in gespanntem Zustand der Spannvorrichtung auf dem Umfang des Moduls senkrecht zur Leitungsrichtung außen liegt.

Durch diese "dezentrale" Verspannung der leitungsumschließenden Elastomerkörper wird eine bessere Einstellbarkeit und möglichst homogene Druckverteilung für eine gleichmäßige Dichtwirkung, sowie eine bei Bedarf abschnittsweise und damit schrittweise Befestigung innerhalb der Wandöffnung zur Erleichterung der Montage bewirkt.

Sowohl dieses Leitungsdurchführungssystem mit individuellen Spannvorrichtungen als auch das zuvor erwähnte mit einer gemeinsamen Spannvorrichtung sind dabei auch für einen Rahmen vorgesehen, der vorzugsweise teilweise oder ganz in die Wandöffnung eingelassen ist, aber auch vor dieser auf der Wand aufgesetzt sein kann. Es ist also (auch) eine Montage des Leitungsdurchführungssystems in einer hier so genannten "Durchlassöffnung" des Rahmens der "Wandöffnung" vorgesehen. Im Folgenden wird mit dem Begriff "Durchlassöffnung" also die Öffnung zur Aufnahme des Leitungsdurchführungssystems des Rahmens bezeichnet, der seinerseits in einer "Wandöffnung" angebracht ist.

Dabei wird insbesondere auf eine zusammenhängende Öffnung abgestellt, also nicht eine Summe aus einer Mehrzahl voneinander getrennter Öffnungen. Solche getrennten Öffnungen kommen dann vor, wenn Rahmen durch feste Gitterunterteilungen so aufgeteilt sind, dass sie eine Mehrzahl (jeweils zusammenhängende) Durchlassöff nungen aufweisen, in die dann jeweils eine Leitungsdurchführung eingesetzt wird. Neben diesen Anwendungsfällen richtet sich die Erfindung bevorzugt auf solche Anwendungsfälle, bei denen die Module tatsächlich direkt aneinander angrenzend, jedenfalls nicht durch Rahmengitterwände oder andere starre Teile voneinander getrennt, eingesetzt werden.

Die Erfindung sieht vor, die Durchlassöffnung mit einer Mehrzahl Module zu verschließen, indem die Module in einer Ebene senkrecht zur Leitungsrichtung innerhalb der Öffnung angeordnet werden. Dazu müssen die Module in die Öffnung passen, d. h. die Querschnittsfläche der zum Verschließen angeordneten Module muss eine Teilfläche der Querschnittsfläche der Durchlassöffnung sein, sodass diese Module gemeinsam zum Dichten in die Durchlassöffnung eingesetzt werden können. Hierzu weisen die Module vorzugsweise allein innenliegende Schalen und eine für eine flächenfüllende Anordnung geeignete Umrissform auf, beispielsweise die Form eines Rechtecks oder eines gleichmäßigen Sechsecks.

Innerhalb der Durchlassöffnung dichten die Module mit der Elastomerkörperdichttläche, die zumindest in gespanntem Zustand der Spannvorrichtung auf dem Umfang der Module senkrecht zur Leitungsrichtung außen liegt.

Die Befestigung der Module innerhalb der Durchlassöffnung erfolgt entweder mit der gemeinsamen Spannvorrichtung oder mit den individuellen Spannvorrichtungen, wobei mit letzteren die Elastomerkörper in Leitungsrichtung verpresst werden und sich in Richtungen senkrecht dazu ausdehnen, sodass die außenliegenden Elastomer körperdichtflächen nach außen gedrückt werden. Durch diese Ausdehnung können die Module gegen die Laibung der Durchlassöffnung verspannt und somit befestigt werden und dichten dabei gegeneinander, sowie gegen eine in einem Elastomerkörper aufgenommene Leitung.

Die Ausdehnung der Module senkrecht zur Leitungsrichtung beim Spannen mit individuellen Spannvorrichtungen ermöglicht, eine einzelne Reihe von Modulen innerhalb der Durchlassöffnung zu befestigen, sobald die Reihe von einer Wand zu einer gegenüberliegenden Wand der Öffnung reicht. Insbesondere erlaubt dies die Befestigung eines Teils der Module, schon bevor die Gesamtheit der für die Leitungsdurchführung benötigten Module in die Durchlassöffnung eingebracht ist.

Weiterhin ist denkbar, wenngleich nicht bevorzugt, dass die erfindungsgemäßen Module mit individuellen Spannvorrichtungen gemeinsam mit weiteren Modulen ohne Spannvorrichtung eingesetzt werden, wobei in diesem Fall mindestens ein erfindungsgemäßes Modul in jeder Reihe enthalten sein sollte, um diese in der Durchlassöffnung zu befestigen. Im Sinne der Erfindung können Zwischenräume, die nicht durch die Ausdehnung der Module beim Verpressen überbrückbar sind, mit Füllstücken, vorzugsweise aus Elastomeren, belegt werden.

Wie oben bereits geschildert, wird der Elastomerkörper mit der individuellen Spannvorrichtung in Leitungsrichtung verpresst, um durch eine Ausdehnung in Richtungen senkrecht dazu zu dichten und die Module in der Durchlassöffnung zu befestigen. Bevorzugt weist die Spannvorrichtung dazu Auflageflächen auf den beidseitigen Stirnseiten des Elastomerkörpers in Leitungsrichtung auf, die die Spannkraft in Leitungsrichtung übertragen. Vorzugsweise umranden diese Auflageflächen die Stirnseiten für eine gleichmäßige Kraftübertragung vollständig. Dies gilt - wie alle im Folgenden beschriebenen Ausgestaltungen - auch unabhängig von dem obigen Modulaufbau aber besonders für diesen.

In einer bevorzugten Ausführung wird die individuelle Spannvorrichtung im ver schlossenen Zustand durch das Umschließen des Elastomerkörpers an diesem befestigt und kann ihn dabei zusammenhalten, wenn er geschlitzt oder mehrteilig ist. Die Spannvorrichtung umfasst hierzu den Elastomerkörper quasi wie ein Band an seinem Umfang senkrecht zur Leitungsrichtung, bedeckt diese Umfangsfläche jedoch nicht vollständig, um die Ausdehnung des Elastomerkörpers senkrecht zur Leitungsrichtung zu gewährleisten.

Die Spannvorrichtung kann zum Umschließen einen ersten Schenkel auf der Umfangsfläche und zum Verpressen je einen zweiten Schenkel auf den Stirnseiten des Elastomerkörpers aufweisen. Damit weisen Elastomerkörper und Spannvorrichtung ein Profil auf, das durch Formschluss der beiden ein Herausziehen des Elastomerkörpers bei geschlossener Spannvorrichtung in Leitungsrichtung verhindert, etwa bei Zug auf der Leitung.

Die individuelle Spannvorrichtung weist bevorzugt einen Verschluss zum Einlegen oder Entnehmen der Leitung auf, sodass die Spannvorrichtung abgenommen werden kann, beispielsweise um diese zu prüfen, zu reparieren oder zu ersetzen, ohne dass hierzu der Elastamerkörper von der Leitung entfernt werden oder sogar die Leitung aus der Wandöffnung herausgenommen werden müsste, und ferner bei geschlitzten oder infolge Mehrteiligkeit abnehmbaren Elastomerkörper die Leitungsdurchführung oder das Modul zudem zum Dichten einer bereits in der Durchlassöffnung verlegten Leitung nutzbar ist.

Eine bevorzugte Ausführung des Verschlusses weist einen Spannbolzen, bevorzugt eine Schraube, auf, der das Öffnen der Spannvorrichtung ermöglicht und diese zum Spannen wieder verschließen kann. Beim Öffnen der Spannvorrichtung wird bevorzugt ein weiterer Spannbolzen zum Spannen in Leitungsrichtung, vorzugsweise eine Schraube, als Gelenkachse zum Aufklappen der Spannvorrichtung senkrecht zur Leitungsrichtung für das Einlegen oder Entnehmen einer Leitung verwendet. Als Material der Spannvorrichtung wird für die Übertragung der Spannkräfte ein Metall oder ein glasfaserverstärkter Kunststoff bevorzugt.

Zur Verteilung der Anpresskraft der Spannvorrichtung weisen die Leitungsdurchführungen mit individueller Spannvorrichtung dabei vorzugsweise beidseitig des Elastomerkörpers bzw. der Elastomerkörperteile Pressplatten aus einem festen Material, beispielsweise Metall oder glasfaserverstärkter Kunststoff, auf. Dadurch wird sichergestellt, dass der zum Dichten notwendige Anpressdruck der Spannvorrichtung auf einen größeren Teil der Stirnseite des Elastomerkörpers übertragen wird. In einer möglichen Ausführung ist jeweils beidseitig in Leitungsrichtung eine Pressplatte fest mit dem Elastomerkörper verbunden. Bei der Verwendung der Pressplatten übt die Spannvorrichtung eine Kraft in Leitungsrichtung direkt auf diese Platten aus, wobei die Platten, gegebenenfalls mit den befestigten Elastomerkörpern, durch Formschluss mit der Spannvorrichtung gehalten werden können.

Ferner sind der Elastomerkörper bzw. die Elastomerkörperteile zur Aufnahme einer oder einer Mehrzahl von Leitungen vorzugsweise bei geöffneter Spannvorrichtung entnehmbar und gegen andere austauschbar, sodass die Leitungsdurchführung oder ein Modul sowohl bezüglich der Anzahl, als auch bezüglich der Art und des Durchmessers der aufzunehmenden Leitungen anpassbar ist.

Bei einer günstigen Ausgestaltung zeichnet sich eine erfindungsgemäße Leitungsdurchführung insbesondere dadurch aus, dass sie außerhalb der Durchlassöffnung eine Leitung aufnehmen kann und an dieser durch Schließen des Verschlusses der Spannvorrichtung fixiert wird. Besonders bei Durchführungen (einschl. Systemen aus Modulen) mit einer Mehrzahl von Leitungen ist es von Vorteil, dass so die dichtenden Elastomerkörper relativ zu den Leitungen individuell vorfixiert werden können.

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.
- Figur 1: zeigt einen Elastomerkörper, bei dem sämtliche Elastomerkörperteil-abschnitte an einer Seite angeordnet sind.
- Figur 2: veranschaulicht einen Elastomerkörper mit abwechselnd an beiden Seiten angeordneten Elastomerkörperteilabschnitten.
- Figur 3: zeigt einen Elastomerkörper mit Funktionszusatz.
- Figur 4: zeigt einen Elastomerkörper mit innen- und außenseitiger Schichtenfolge.
- Figur 5: veranschaulicht ein Leitungsdurchführungssystem mit quer zur Leitungsrichtung wirkender Spannvorrichtung.
- Figur 6: zeigt einen alternativen Elastomerkörper für das in Figur 5 dargestellte Leitungsdurchführungssystem.

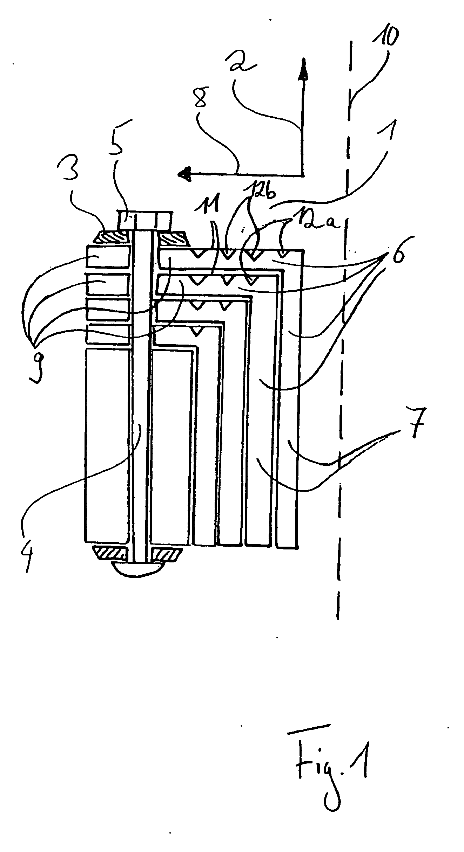

Figur 1 zeigt in Schnittdarstellung einen Ausschnitt einer Leitungsdurchführung mit einem Elastomerkörper 1, an dessen in Leitungsrichtung 2 außenliegenden Stirnseiten Spannplatten 3 zum Spannen des Elastomerkörpers 1 in Leitungsrichtung 2 vorgesehen sind. Der Elastomerkörper 1 ist zu diesem Zweck von einem Spannbolzen 4 durchsetzt, wobei ein Anziehen einer an den Spannbolzen 4 vorgesehenen Mutter 5 die Spannplatten 3 aufeinander zu bewegt. Dabei legt sich der Elastomerkörper 1 dann mit seiner in der Darstellung linken Seite an eine Laibung einer Wand und mit der rechten Seite an eine durch die Wand hindurch geführte Leitung an.

Der Elastomerkörper 1 ist aus mehreren Elastomerkörperteilen 6 aufgebaut, die jeweils eine sich in Leitungsrichtung 2 erstreckende Schale 7 und einen sich in Abstandsrichtung 8 von der Leitung weg erstreckenden Elastomerkörperteilabschnitt 9 aufweisen. Dabei sind die Elastomerkörperteile 6 so angeordnet, dass alle Elastomerkörperteilabschnitte 9 an einer in Leitungsrichtung 2 gelegenen Seite des Elastomerkörpers 7 angeordnet sind. Zwischen der Schale 7 und dem Elastomerkörperteilabschnitt 9 eines Elastomerkörperteils 6 verläuft dabei keine Materialgrenze, jeder Elastomerkörperteil 6 ist für sich also einstückig in einem TPE-Spritzguss-Verfahren hergestellt. Ein jeder Elastomerkörperteilabschnitt 9 weist eine Durchgangsöffnung für den Spannbolzen 4 auf, ist aber außerhalb der Zeichenebene dennoch zusammenhängend ausgebildet. Von solchen Durchgangsöffnungen sowie gegebenenfalls in Abstandsrichtung 8 zum Zwecke einer Aufklappbarkeit durch den Elastomerkörper 1 verlaufenden Schnitten abgesehen, sind die Elastomerkörperteile 6 rotationssymmetrisch um die Achse 10 ausgebildet. Dabei sind dann in Umlaufrichtung mehrere Spannbolzen 4 und entsprechende Durchgangsöffnungen in den Elastomerkörperteilabschnitten 9 vorgesehen.

Die Mehrzahl Elastomerkörperteile 6 wird durch die aus Spannplatten 3 und Spannbolzen 4 mit Muttern 5 gebildete Spannvorrichtung zusammengehalten. Ein Monteur kann dann auf der Baustelle zur Anpassung der Leitungsdurchführung an eine hindurchzuführende Leitung größeren Durchmessers eine entsprechende Anzahl Schalen 7 von den Elastomerkörperteilen 6 entfernen, Hierzu sind an einer der Schale 7 entgegengesetzten, sich von der Leitung weg erstreckenden Stirnseite 11 der Elastomerkörperteile 6 Einkerbungen 12 a vorgesehen, entlang welchen die Schalen 7 abgetrennt werden können. Da im Falle einer Leitung großen Durchmessers und entsprechend vielen entfernten Schalen 7 auch Elastomerkörperteilabschnitte 9 in die Durchgangsöffnung hineinragen würden, sind an den Stirnseiten 11 der Elastomerkörperteile 9 auch weitere, die weiter außenliegenden Schalen 7 kennzeichnende Einkerbungen 12 b vorgesehen.

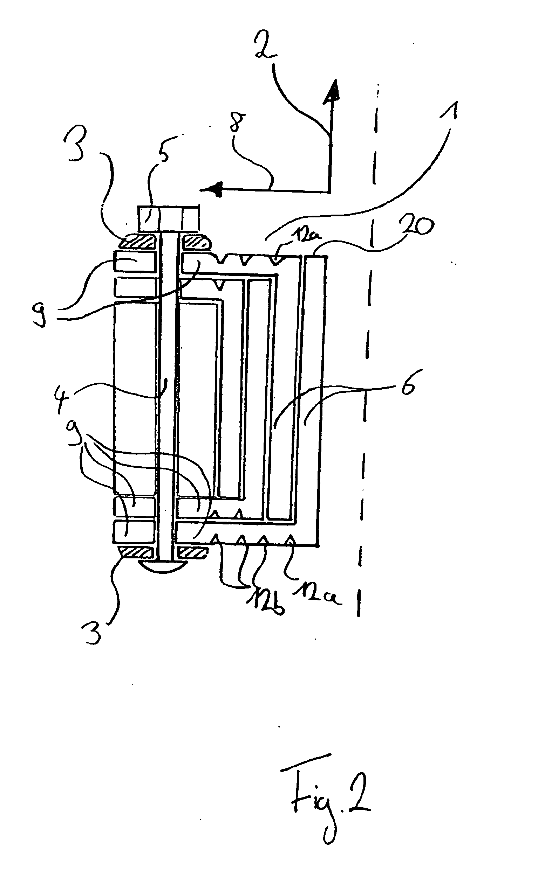

Figur 2 zeigt ebenfalls eine Leitungsdurchführung mit Elastomerkörper 1 und Spannvorrichtung, wobei Teile mit zu Figur 1 identischen Bezugszeichen die dort beschriebenen Funktionalität haben. Im Gegensatz zu Figur 1 sind hier die Elastomerkörperteile 6 derart angeordnet, dass die Elastomerkörperteilabschnitte 9 an beiden in Leitungsrichtung 2 gelegenen Seiten des Elastomerkörpers 1 vorliegen. Bei der in Figur 1 gezeigten Anordnung sind die freien Enden sämtlicher Schalen 7 an einer Stirnseite des Elastomerkörpers sichtbar, wohingegen durch die abwechselnde Anordnung in Figur 2 nur das freie Ende 20 der innersten Schale 6 an einer Stirnseite zu erkennen ist: die übrigen Schalen 6 sind durch die Elastomerkörperteilabscihnitte 9 bedeckt.

Bei dieser Anordnung werden die Schalen 6 zur Anpassung an eine Leitung größeren Durchmessers abwechselnd an den beiden Stirnseiten entlang den Einkerbungen 12 a ausgelöst. Sofern mehrere Schalen 6 entfernt werden, können wiederum die Elastomerkörperteilabschnitte 9 über die Einkerbungen 12 b in ihrer Ausdehnung in Abstandsrichtung 8 entsprechend angepasst werden. Diese Anordnung eignet sich jedoch nicht nur für ein Austrennen der Schalen 6, sondern insbesondere auch wenn diese nur vorübergehend ausgeklappt werden. Vorliegend würde also die innerste Schale nach unten, die nächst benachbarte dann nach oben usw. geklappt werden, wobei die Einkerbungen 12 a/12 b dann als Scharniere das Ausklappen erleichtern.

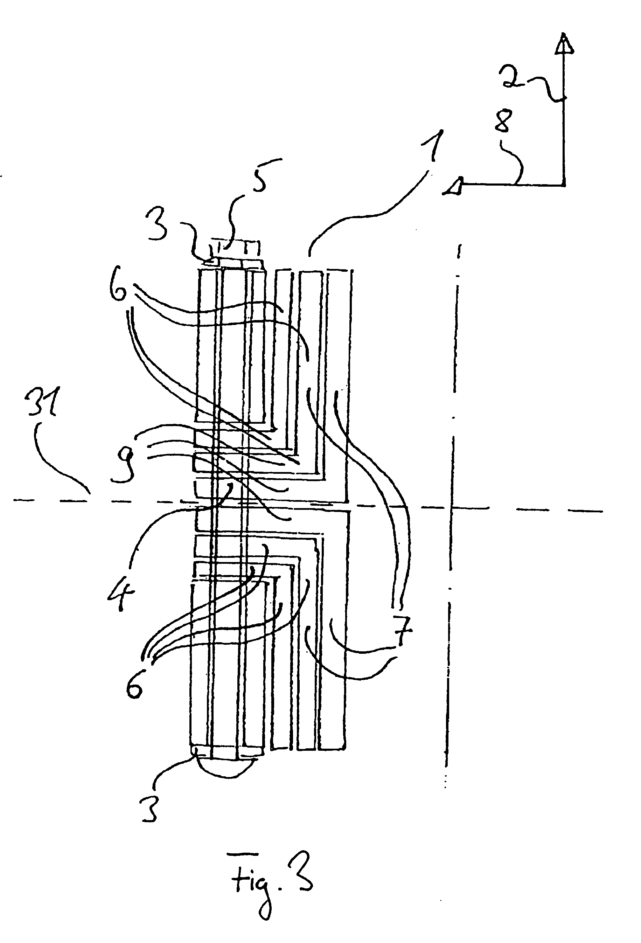

Auch Figur 3 zeigt eine Leitungsdurchführung mit Elastomerkörper 1 und Spannvorrichtung, wobei Teile mit zu Figur 1 identischen Bezugszeichen wiederum die dort beschriebene Funktionalität haben. Bei diesem Ausführungsbeispiel ist ein zweiter Satz Elastomerkörperteile 6 vorgesehen, der als Spiegelung der in Figur 1 dargestellten Elastomerkörperteile 6 an einer zur Leitungsrichtung 2 senkrechten Ebene 31 vorliegt. Die Elastomerkörperteilabschnitte 9 sind also in Bezug auf die Leitungsrichtung 2 innerhalb des resultierenden Elastomerkörpers 1 angeordnet, und die Schalen 7 der Elastomerkörperteile 6 erstrecken sich von der Spiegelebene 31 ausgehend zu den Stirnseiten des Elastomerkörpers 1; es liegt an beiden Stirnseiten die selbe Anzahl freier Enden von Schalen 7 vor.

Da bei dieser Ausführungsform die Elastomerkörperteile 6 jeweils paarweise vorliegen, kann immer ein Elastomerkörperteil 6 eines solchen Paares zur Dichtung eingesetzt werden, wohingegen der andere Elastomerkörperteil 6 mit einem Funktionszusatz versehen werden kann. In diesem sind dann also Festkörperpartikel dispergiert, mit denen für den Elastomerkörperteil 6 eine gewisse Leitfähigkeit eingestellt werden kann, die beispielsweise eine EMV-Abschirmung ermöglicht.

Die elastischen Eigenschaften eines Elastomerkörperteils 6 können hierbei je nach Funktionszusatz beeinflusst werden, was eine Beeinträchtigung der Dichtungseigenschaften zur Folge haben kann. Aus diesem Grund werden die Elastomerkörperteile 6 jeweils paarweise vorgesehen, sodass die Dichtwirkung durch zumindest einen der beiden sichergestellt ist. Dabei können sämtliche Elastomerkörperteile 6 mit Funktionszusatz auf einer Seite der Spiegelebene 31 angeordnet sein oder auch solcher maßen beidseits davon verteilt werden, dass sich Schalen 7 mit und ohne Funktionszusatz sowohl in Abstandsrichtung 8 als auch in Leitungsrichtung 2 abwechseln. Bei der erstgenannten Variante ist das Zusammensetzen des Elastomerkörpers 1 weniger aufwändig, wohingegen die zweitgenannte Variante eine gleichmäßigere Verteilung der elastischen und funktionalen Eigenschaften über den gesamten Elastomerkörper 1 ermöglicht.

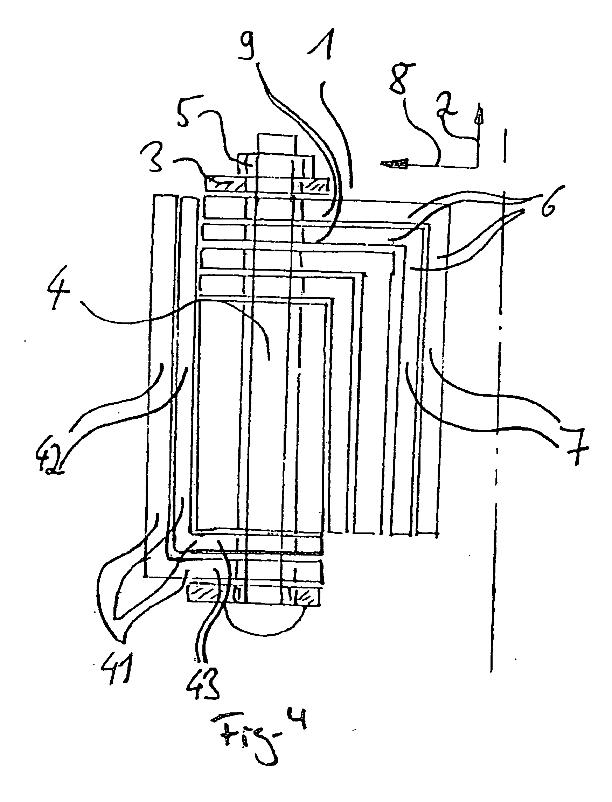

Die in Figur 4 dargestellte Leitungsdurchführung ist analog zu der in Figur 1 gezeigten aufgebaut, wobei zwei zusätzliche Elastomerkörperteile 41 vorgesehen sind, deren Schalen 42 in Abstandsrichtung 8 am übrigen Elastomerkörper 1 außen anliegend eine außenseitige Schichtenfolge bilden. Die beiden Elastomerkörper 41 sind dabei wie die übrigen Elastomerkörper 6 aufgebaut, es liegt also an jedem Elastomerkörperteil 41 in Abstandsrichtung 8 genau eine Schale 42 vor. An diese schließt sich bezogen auf die Leitungsrichtung 2 endseitig ein sich in Abstandsrichtung 8 zur Leitung hin erstreckender Elastomerkörperteilabschnitt 43 an. In den Elastomerkörperteilabschnitten 43 ist wiederum jeweils eine Durchgangsöffnung für den Spannbolzen 4 vorgesehen, die zusätzlichen Elastomerkörperteile 41 sind also durch den Spannbolzen 4 fest mit dem übrigen Elastomerkörper 1 verbunden.

Der Elastomerkörper 1 dieser Ausführungsform kann also durch Entnahme von innenseitig liegenden Schalen 7 an den Durchmesser einer hindurch zu führenden Leitung angepasst werden, und durch Entfernen von außenliegenden Schalen 42 auch an unterschiedlich bemessene Durchgangsöffnungen.

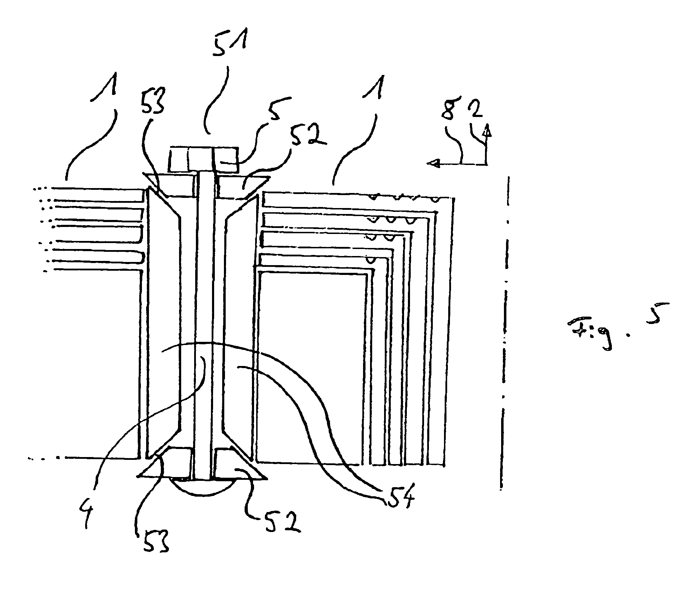

Figur 5 zeigt ein Leitungsdurchführungssystem, wobei zwei Elastomerkörper 1 mit innenseitiger Schichtenfolge von der selben Spannvorrichtung 51 verspannt werden. Der linke Elastomerkörper 1 ist in der Darstellung nur bereichsweise angedeutet, soll jedoch in dem nichtdargestellten Bereich analog zu dem rechten Elastomerkörper 1 eine Durchgangsöffnung mit Schalen 6 freigeben; durch den Spannbolzen 4 verläuft in diesem Sinne eine zur Zeichenebene senkrechte Spiegelebene.

Der Spannbolzen 4 wirkt bei dieser Ausführungsform nicht über Spannplatten 3 auf die Stirnseiten der Elastomerkörper 1, sondern es werden durch Anziehen der Mutter 5 Spannkörper 52 in Leitungsrichtung 2 aufeinander zu bewegt. Diese Spannkörper 52 haben einen konischen Sitz 53 an den Spannplatten 54, sodass die Spannplatten 54 beim Aufeinanderzubewegen der Spannkörper 52 voneinander wegbewegt werden. Die linke Spannplatte 54 wird damit in Abstandsrichtung 8 gegen den linken Elastomerkörper 1 gedrückt, wohingegen die rechte Spannplatte 54 entgegen der Abstandsrichtung gegen den rechten Elastomerkörper 1 verpresst wird; beide Elastomerkörper 1 werden somit durch die selbe Spannvorrichtung 51 gegen die jeweils hindurchgeführte Leitung verpresst.

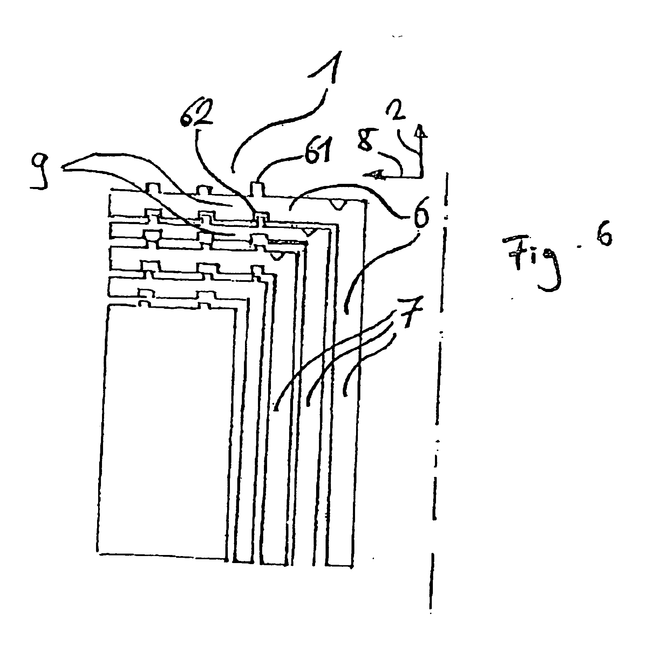

Figur 6 zeigt einen Elastomerkörper 1, der in zu Figur 5 beschriebener Weise durch eine Spannvorrichtung 51 quer zur Leitungsrichtung 2 komprimiert werden kann. Bei dieser Ausführungsform wird der Elastomerkörper 1 analog zu Figur 5 nicht von einem Spannbolzen 4 durchsetzt. Damit die Elastomerkörperteile 6 dennoch zusammengehalten werden, sind jeweils an einer der Schale 7 entgegengesetzten, sich von der Leitung weg erstreckenden Stirnfläche der Elastomerkörperteilabschnitte 9 in Leitungsrichtung 2 hervortretende Vorsprünge 61 vorgesehen. Diese Vorsprünge 61 greifen jeweils in komplementäre Vertiefungen 62 in der gegenüberliegenden Seitenfläche des in Leitungsrichtung 2 nächst benachbarten Elastomerkörperteils 6. Hierbei finden die Vorsprünge 61 einen Klemmsitz in den Vertiefungen 62, sodass die Elastomerkörperteilabschnitte 9 formschlüssig miteinander verbunden sind. Ein entsprechender Elastomerkörper 1 eines Leitungsdurchführungssystems mit Verspannung quer zur Leitungsrichtung 2 kann somit auch ohne einen den Elastomerkörper 1 durchsetzenden Spannbolzen 4 als ein zusammengehaltener Elastomerkörper 1 gehandhabt werden.

## Patentansprüche

1. Leitungsdurchführung zum Aufbauen eines dichtenden Verschlusses einer von einer Leitung durchsetzten Öffnung in einer Wand mit
einem Elastomerkörper (1) zur dichten Anlage an der Leitung aus mehreren für sich einstückigen Teilen (6, 41) und einer Spannvorrichtung (3, 4, 5, 51) zum Spannen des Elastomerkörpers (1) und dadurch dichten Anpressen des Elastomerlcörpers (1) auf die Leitung,
wobei die Elastomerkörperteile (6, 41) dazu ausgelegt sind, im zusammengebauten Zustand eine Folge mehrerer hinsichtlich einer den Abstand zur Leitung bestimmenden Richtung (8) benachbarter Schalen (7, 42) zu ergeben,
und die Leitung in jeder Schicht dieser Folge von den Schalen vollständig umgeben ist,
wobei an jedem Elastomerkörperteil (6, 41) hinsichtlich der Abstandsrichtung (8) jeweils nicht mehr als eine Schale (7, 42) der Folge vorgesehen ist und
eine Mehrzahl der Elastomerkörpertelle (6, 41) jeweils mit einem in Leitungsrichtung (2) endseitig an der Schale (7, 42) ausgebildeten und sich in Abstandsrichtung (8) von dieser nach innen und/oder außen erstreckenden Abschnitt (9, 43) des Elastomerkörperteils an einem anderen Elastomerkörperteil (6, 41) anliegt,
und wobei die Schalen (7, 42) Rotationskörper oder Segmente davon mit einer gemeinsamen in Leitungsrichtung (2) ausgerichteten Rotationsachse (10) sind,
**dadurch gekennzeichnet, dass**
die Schale (7, 42) eines Elastomerkörperteils (6, 41) durch eine sich in Leitungs- und Abstandsrichtung (8) erstreckende Trennfuge unterbrochen ist.

2. Leitungsdurchführung nach Anspruch 1, bei der ein Elastomerkörperteil (6, 41) mit seiner Schale (7, 42) an einer Schale (7, 42) eines in der Abstandsrichtung (8) außenliegend nächst benachbarten Elastomerkörperteils (6, 41) anliegt und an diesem auch mit seinem Elastomerkörperteilabschnitt (9, 43) eine Anlagefläche findet, die größer ist als eine Querschnittfläche der Schale (7, 42) in einer zur Leitungsrichtung (2) senkrechten Ebene.

3. Leitungsdurchführung nach Anspruch 1, bei der ein Elastomerkörperteil (6, 41) mit seiner Schale (7, 42) an einem in der Abstandsrichtung (8) außenliegend nächst benachbarten Elastomerkörperteil (6, 41) anliegt und mit seinem Elastomerkörpertellabschnttt (9, 43) an einem in der Abstandsrichtung (8) außenliegend übernächst benachbarten Elastomerkörperteil (6, 41) eine Anlagefläche findet, die größer ist als eine Querschnittfläche einer Schale (7, 42) des übernächst benachbarten Elastomerkörperteils (6, 41) in einer zur Leitungsrichtung (2) senkrechten Ebene.

4. Leitungsdurchführung nach einem der vorstehenden Ansprüche, bei der an einer der Schale (7, 42) entgegengesetzten, sich von der Leitung weg oder zu dieser hin erstreckenden Stirnseite eines Elastomerkörperteilabschnitts (9, 43) eine Markierung vorgesehen ist.

5. Leitungsdurchführung nach einem der vorstehenden Ansprüche, bei der zwischen zwei Elastomerkörperteilen (6, 41), vorzugsweise zwischen den Elastomerkörperteilabschnitten (9, 43) der Elastomerkörperteile (6, 41), eine formschlüssige Verbindung besteht.

6. Leitungsdurchführung nach einem der vorstehenden Ansprüche, wobei der sich in Abstandsrichtung (8) erstreckende Elastomerkörperteilabschnitt (9, 43) in Leitungsrichtung (2) über höchstens 50 % der Elastomerkörperteillänge vorliegt.

7. Leitungsdurchführung nach einem der vorstehenden Ansprüche, bei der ein Elastomerkörperteil (6, 41) einen Funktionszusatz, nämlich Festkörperpartikel zur EMV-Abschirmung, Röntgenabsorption oder zur Verbesserung der Brandschutzeigenschaften, enthält.

8. Leitungsdurchführung nach einem der vorstehenden Ansprüche, bei der die Elastomerkörperteile (6, 41) Spritzgussteile, Pressteile oder Transferpressteile sind.

9. Leitungsdurchführung nach einem der vorstehenden Ansprüche, bei der ausschließlich für eine Anpassung an Leitungsquerschnitte Elastomerkörperteile (6) mit Schalen (7) vorgesehen sind.

10. Leitungsdurchführungssatz mit einer Mehrzahl Leitungsdurchführungen nach einem der vorstehenden Ansprüche, die untereinander verschieden sind, jedoch jeweils ein Elastomerkörperteil (6, 41) aufweisen, das zu je einem Elastomerkörperteil (6, 41) der anderen Leitungsdurchführungen in dem Satz identisch ist.

11. Leitungsdurchführungssystem mit einer Mehrzahl Leitungsdurchführungen nach einem der Ansprüche 1-9 oder einem Leitungsdurchführungssatz nach Anspruch 10 zum Aufbauen eines dichtenden Verschlusses einer einzigen Öffnung in einer Wand mit dieser Mehrzahl Leitungsdurchführungen als Module,
wobei die Mehrzahl Leitungsdurchführungen jeweils aufweisen:
eine solche Querschnittsfläche senkrecht zur Leitungsrichtung (2) im Verhältnis zu der Querschnittsfläche der Wandöffnung, dass sie gemeinsam mit mindestens einer Spannvorrichtung (3, 4, 5, 51) zum Dichten eingesetzt werden können,
wobei mindestens zwei Leitungsdurchführungen von der mindestens einen, quer zur Leitungsrichtung (2) auf die Elastomerkörper (1) wirkenden Spannvorrichtung (3, 4, 5, 51) gemeinsam gespannt werden und
eine jeweilige Dichtfläche eines jeweiligen Elastomerteils, die in gespanntem Zustand der Spannvorrichtung (3, 4, 5, 51) auf dem Umfang der Leitungsdurchführung senkrecht zur Leitungsrichtung (2) außen liegt.

12. Leitungsdurchführungssystem mit einer Mehrzahl Leitungsdurchführungen nach einem der Ansprüche 1 - 9 oder einem Leitungsdurchführungssatz nach Anspruch 10 zum Aufbauen eines dichtenden Verschlusses einer einzigen Öffnung in einer Wand mit dieser Mehrzahl Leitungsdurchführungen als Module,
wobei die Mehrzahl Leitungsdurchführungen jeweils aufweisen:
eine solche Querschnittsfläche senkrecht zur Leitungsrichtung (2) im Verhältnis zu der Querschnittsfläche der Wandöffnung, dass sie gemeinsam zum Dichten eingesetzt werden können,
jeweils eine eigene Spannvorrichtung (3, 4, 5, 51) zum individuellen Spannen, die in Leitungsrichtung (2) wirkt und damit senkrecht zur Leitungsrichtung (2) eine Aufweitung des Elastomerkörpers (1) bewirken kann, und
eine jeweilige Dichtfläche eines jeweiligen Elastomerteils, die in gespanntem Zustand der Spannvorrichtung (3, 4, 5, 51) auf dem Umfang der Leitungsdurchführung senkrecht zur Leitungsrichtung (2) außen liegt.

13. Verwendung einer Leitungsdurchführung nach einem der Ansprüche 1 - 9 oder eines Leitungsdurchführungssatzes nach Anspruch 10 oder eines Leitungsdurchführungssystems nach Anspruch 11 oder 12 bei der die Schale (7, 42) eines Elastomerkörperteils zur Dimensionsanpassung des Elastomerkörpers um einen Verbindungssteg zu dem Elastomerkörperteilabschnitt (9, 43) geklappt werden und mit dem Elastomerkörperteilabschnitt (9,43) verbunden bleiben.

14. Verwendung einer Leitungsdurchführung nach einem der Ansprüche 1 - 9 oder eines Leitungsdurchführungssatzes nach Anspruch 10 oder eines Leitungsdurchführungssystems nach Anspruch 11 oder 12 auch in Verbindung mit Anspruch 13, zum Abdichten einer Strom-, Gas-, Wasser-, Wärme-, Telekommunikations-, Signal-, oder Datenleitung in einer Gebäudewand, Schiffswand oder Gehäusewand.

## Claims

1. A conduit duct for setting up a sealing of an opening in a wall penetrated by a conduit, having
an elastomer body (1) for contacting said conduit sealingly, made of a plurality of parts (6, 41) being integral respectively, and a tensioning device (3, 4, 5, 51) for tensioning said elastomer body (1) and thereby pressing said elastomer body (1) onto that conduit sealingly,
wherein said elastomer body parts (6, 41) are adapted for forming a sequence of a multitude of shells (7, 42) in an assembled state, said shells (7, 42) being adjacent with respect to a direction (8) defining a distance to said conduit,
and said conduit is completely enclosed by said shells in each layer of said sequence,
wherein no more than one shell (7, 42) of said sequence is provided at each elastomer body part (6, 41) with respect to said distance direction (8) respectively and
a plurality of said elastomer body parts (6, 41) respectively contact another elastomer body part (6, 41) with a portion (9, 43), which portion (9, 43) is respectively provided at an end of said shell (7, 42) and extends therefrom inwards and/or outwards in said distance direction (8),
and wherein said shells (7, 42) are rotational solids or segments thereof having a common rotational axis (10) oriented in conduit direction (2),
**characterized in that**
the shell (7,42) of an elastomer body part (6,41) is interrupted by a separating joint extending in said conduit direction (2) and in said distance direction (8).

2. The conduit duct according to claim 1, wherein an elastomer body part (6, 41) contacts with its shell (7, 42) a shell (7, 42) of an elastomer body part (6, 41) lying outside in said distance direction (8) directly adjacent and also contacts the latter with its elastomer body part portion (9, 43) with a contact area larger than a cross-sectional area of said shell (7, 42) in a plane perpendicular to said conduit direction (2).

3. The conduit duct according to claim 1, wherein an elastomer body part (6, 41) contacts with its shell (7, 42) an elastomer body part (6, 41) lying outside in said distance direction (8) directly adjacent and contacts with its elastomer body part portion (9, 43) an elastomer body part (6, 41) lying outside, adjacent to said elastomer body part (6, 41) lying directly adjacent in said distance direction (8), with a contact area larger than, in a plane perpendicular to said conduit direction (2), a cross-sectional area of a shell (7, 42) of said elastomer body part (6, 41) lying outside adjacent to said elastomer body part (6, 41) lying directly adjacent.

4. The conduit duct according to one of the preceding claims, wherein a marking is provided at the face of an elastomer body part portion (9, 43), opposed to said shell (7, 42) and extending away from said conduit or towards it.

5. The conduit duct according to one of the preceding claims, wherein a form-fit connection is provided between two elastomer body parts (6, 41), preferably between said elastomer body part portions (9, 43) of said elastomer body parts (6,41).

6. The conduit duct according to one of the preceding claims, wherein said elastomer body part portion (9, 43) extending in said distance direction (8) is provided with respect to said conduit direction (2) over 50 % of said elastomer body length at maximum.

7. The conduit duct according to one of the preceding claims, wherein an elastomer body part (6, 41) comprises a functional addition, namely solid particles for an EMI-Shielding, for an X-Ray absorption or for improving fire protection properties.

8. The conduit duct according to one of the preceding claims, wherein said elastomer body parts (6, 41) are injection-molded parts, pressed parts or transfer-pressed parts.

9. The conduit duct according to one of the preceding claims, wherein said elastomer body parts (6) with said shells (7) are solely provided for an adaption to different conduit cross sections.

10. A conduit duct set having a plurality of conduit ducts according to one of the preceding claims, which are different to each other, but comprise each an elastomer body part (6, 41) which is identical to an elastomer body part (6, 41) of said other conduit ducts in said set respectively.

11. A conduit duct system having a plurality of conduit ducts according to one of claims 1 - 9 or a conduit duct set according to claim 10 for setting up a sealing of a single opening in a wall with said plurality of conduit ducts as modules, wherein said plurality of conduit ducts comprise respectively:
such a cross sectional area perpendicular to said conduit direction (2) in relation to the cross sectional area of said wall opening that they can be inserted together with at least one tensioning device (3, 4, 5, 51) for sealing,
wherein at least two conduit ducts are tensioned together by said at least one tensioning device (3, 4, 5, 51) acting on said elastomer bodies (1) obliquely to said conduit direction (2) and
a respective sealing surface of a respective elastomer part arranged, when said tensioning device (3, 4, 5, 51) is tensioned, outside with respect to a direction perpendicular to said conduit direction (2) on the circumference of said conduit duct.

12. A conduit duct system having a plurality of conduit ducts according to one of claims 1 - 9 or a conduit duct set according to claim 10 for setting up a sealing of a single opening in a wall with said plurality of conduit ducts as modules, wherein said plurality of conduit ducts comprise respectively:
such a cross sectional area perpendicular to said conduit direction (2) in relation to the cross sectional area of said wall opening that they can be inserted together for sealing,
an own tensioning device (3, 4, 5, 51) each for tensioning individually, which acts in said conduit direction (2) and thus can effect a widening of said elastomer body (1) perpendicularly to said conduit direction (2), and
a respective sealing surface of a respective elastomer part arranged, when said tensioning device (3, 4, 5, 51) is tensioned, outside with respect to a direction perpendicular to said conduit direction (2) on the circumference of said conduit duct.

13. A use of the conduit duct according to one of claims 1 - 9 or of the conduit duct set according to claim 10 or of a conduit duct system according to claim 11 or 12, wherein a shell (7, 42) of an elastomer body part is folded around a connecting web to said elastomer body part portion (9, 43) for dimensionally adapting said elastomer body and therein remains connected with said elastomer body part portion (9, 43).

14. A use of a conduit duct according to one of claims 1 - 9 or of a conduit duct set according to claim 10 or of a conduit duct system according to claim 11 or 12, also in combination with claim 13, for sealing an electric current, gas, water, heat, telecommunications, signal, or data conduit in a wall of a building, a wall of a ship, or a wall of a housing.

## Revendications

1. Passage de conduite permettant de réaliser une obturation étanche d'une ouverture réalisée dans une paroi et traversée par une conduite, comportant
un corps en élastomère (1) destiné à s'appliquer de manière étroite à la conduite et composé de plusieurs pièces (6, 41), constituées en soi d'un seul tenant, et d'un dispositif de tension (3, 4, 5, 51) destiné à exercer une tension sur le corps en élastomères (1) et par là même une compression étroite du corps en élastomère (1) sur la conduite,
dans lequel les parties de corps en élastomère (6, 41) sont conçues pour produire, à l'état assemblé, une suite de plusieurs coques (7, 42) voisines relativement à un sens (8) définissant l'écart par rapport à la conduite, et la conduite est entièrement entourée, à chaque couche de cette suite, par les coques,
dans lequel il n'est présent, en chaque partie de corps en élastomère (6, 41), considéré dans le sens d'écartement (8), pas plus d'une coque (7, 42) de la suite, et
une pluralité de parties de corps en élastomère (6, 41) sont en contact avec une autre partie de corps en élastomère (6, 41) par l'intermédiaire, à chaque fois, d'une section (9, 43) de la partie de corps en élastomère, laquelle section est conçue dans le sens de la conduite (2) d'un côté terminal de la coque (7, 42) et se prolonge dans le sens d'écartement (8) à partir de celui-ci vers l'intérieur et/ou l'extérieur,
et dans lequel les coques (7, 42) sont des corps rotatifs ou des segments de ceux-ci présentant un axe de rotation (10) commun orienté dans le sens de la conduite (2),
**caractérisé en ce que**
la coque (7, 42) d'un corps en élastomère (6, 41) est interrompue par un joint de séparation qui se prolonge dans le sens de la conduite (2) et dans le sens d'écartement (8).
et dans lequel les coques (7, 42) sont des corps rotatifs ou des segments de ceux-ci présentant un axe de rotation (10) commun orienté dans le sens de la conduite (2).

2. Passage de conduite selon la revendication 1, dans lequel une partie de corps en élastomère (6, 41) est en contact par sa coque (7, 42) avec une coque (7, 42) d'une partie de corps en élastomère (6, 41) immédiatement voisine située extérieurement dans le sens d'écartement (8) et trouve également une surface d'appui avec celle-ci par sa section de partie de corps en élastomère (9, 43), laquelle surface d'appui est plus grande qu'une surface en section transversale de la coque (7, 42) dans un plan perpendiculaire au sens de la conduite (2).

3. Passage de conduite selon la revendication 1, dans lequel une partie de corps en élastomère (6, 41) est en contact par sa coque (7, 42) avec une partie de corps en élastomère (6, 41) immédiatement voisine située extérieurement dans le sens d'écartement (8) et trouve également, par sa section de partie de corps en élastomère (9, 43), une surface d'appui avec la partie de corps en élastomère (6, 41) faisant immédiatement suite à la partie de corps en élastomère avec laquelle ladite section était immédiatement voisine, laquelle surface d'appui est plus grande qu'une section transversale d'une coque (7, 42) de la partie de corps en élastomère (6, 41) faisant immédiatement suite à la partie de corps en élastomère avec laquelle ladite section de partie de corps était immédiatement voisine, dans un plan perpendiculaire au sens de la conduite (2).

4. Passage de conduite selon l'une des revendications précédentes, dans lequel il est prévu une marque sur une face frontale d'une section de partie de corps en élastomère (9, 43) opposée à la coque (7, 42) et se prolongeant vers ou à l'opposé de la conduite.

5. Passage de conduite selon l'une des revendications précédentes, dans lequel il existe un raccord par complémentarité de forme entre deux parties de corps en élastomère (6, 41), de préférence entre les sections (9, 43) des parties de corps en élastomère (6, 41).

6. Passage de conduite selon l'une des revendications précédentes, dans lequel la section de partie de corps en élastomère (9, 43) prolongée dans le sens d'écartement (8) est présente sur plus de 50 % de la longueur de la partie de corps en élastomère dans le sens de la conduite (2).

7. Passage de conduite selon l'une des revendications précédentes, dans lequel une partie de corps en élastomère (6, 41) contient un supplément fonctionnel, à savoir des particules solides à fonction de blindage CEM, d'absorption des rayons X ou de renfort des caractéristiques ignifugeantes.

8. Passage de conduite selon l'une des revendications précédentes, dans lequel les parties de corps en élastomère (6, 41) sont des pièces moulées par injection, des pièces moulées à la presse ou des pièces moulées par transfert.

9. Passage de conduite selon l'une des revendications précédentes, dans lequel les parties de corps en élastomère (6) avec les coques (7) sont pourvues uniquement pour s'adapter aux sections transversales de conduite.

10. Ensemble de passages de conduite comportant une pluralité de passages de conduite selon l'une des revendications précédentes, différents les uns par rapport aux autres, mais présentant chacun une partie de corps en élastomère (6, 41) qui est identique pour chacun d'eux à une partie de corps en élastomère (6, 41) respective des autres passages de conduite de l'ensemble.

11. Système de passages de conduite comportant une pluralité de passages de conduite selon l'une des revendications 1 à 9 ou un ensemble de passages de conduite selon la revendication 10 permettant de réaliser une obturation étanche d'une ouverture unique pratiquée dans une paroi à l'aide d'une pluralité de passages de conduite utilisés de manière modulaire,
dans lequel la pluralité de passages de conduite présentent respectivement :
une surface de section transversale qui est perpendiculaire au sens de la conduite (2) par rapport à la surface de section transversale de l'ouverture de la paroi, de telle manière que celles-ci peuvent être mises en oeuvre conjointement avec au moins un dispositif de tension (3, 4, 5, 51) à des fins d'obturation.
dans lequel au moins deux passages de conduite sont soumis conjointement à la tension de l'au moins un dispositif de tension (3, 4, 5, 51) agissant transversalement au sens de la conduite (2) sur les corps en élastomère (1), et
une surface d'étanchéité respective d'une partie en élastomère respective qui, à l'état de tension du dispositif de tension (3, 4, 5, 51), se situe à l'extérieur, sur le pourtour du passage de conduite perpendiculairement au sens de la conduite (2).

12. Système de passages de conduite comportant une pluralité de passages de conduite selon l'une des revendications 1 à 9 ou un ensemble de passages de conduite selon la revendication 10 permettant de réaliser une obturation étanche d'une ouverture unique pratiquée dans une paroi à l'aide d'une pluralité de passages de conduite utilisés de manière modulaire,
dans lequel la pluralité de passages de conduite présentent respectivement :
une surface de section transversale qui est perpendiculaire au sens de la conduite (2) par rapport à la surface de section transversale de l'ouverture de la paroi, de telle manière que celles-ci être mises en oeuvre conjointement à des fins d'obturation,
un dispositif de tension (3, 4, 5, 51) respectif pour une tension individuelle agissant dans le sens de la conduite (2) et ainsi susceptible d'entraîner, perpendiculairement au sens de la conduite (2), un élargissement du corps en élastomère (1), et
une surface d'étanchéité respective d'une partie en élastomère respective qui, à l'état de tension du dispositif de tension (3, 4, 5, 51), se situe à l'extérieur, sur le pourtour du passage de conduite perpendiculairement au sens de la conduite (2).

13. Utilisation d'un passage de conduite selon l'une des revendications 1 à 9 ou d'un ensemble de passages de conduite selon la revendication 10 ou d'un système de passages de conduite selon la revendication 11 ou 12, dans lequel la coque (7, 42) d'une partie de corps en élastomère peut être rabattue, en étant articulée sur une nervure de liaison, vers la section de partie de corps en élastomère (9, 43) et rester reliée à la section de partie de corps en élastomère (9, 43).

14. Utilisation d'un passage de conduite selon l'une des revendications 1 à 9 ou d'un ensemble de passages de conduite selon la revendication 10 ou d'un système de passages de conduite selon la revendication 11 ou 12 également en liaison avec la revendication 13, pour étanchéifier une ligne électrique, une conduite de gaz, une conduite d'eau, une conduite thermique, une ligne de télécommunication, une ligne de signaux ou de données dans la paroi d'un bâtiment, d'un navire ou d'un boîtier.
